# EUROPEAN PATENT APPLICATION

(11) **EP 1 487 176 A1**
(43) Date of publication of application: **15.12.2004**
(21) Application number: 04253334.9
(22) Date of filing: 04.06.2004
(51) Int. Cl.: H04L 29/06, G06F 19/00

(54) **A method of paying from an account by a customer having a mobile user terminal, and a customer authenticating network**

(30) Priority: 09.06.2003 US 457139
(71) Applicant: LUCENT TECHNOLOGIES INC., Murray Hill, New Jersey 07974-0636 (US)
(72) Inventor: Ather Khan, Mohammad, Peatmoor Swindon SN5 5AB (GB); Samual, Isaac, Shaw Swindon SN5 5SH (GB)
(74) Representative: Sarup, David Alexander

(57) **Abstract**

A method is provided of paying from an account by a customer having a mobile user terminal. The method comprises the following steps. The phone number of mobile user terminal of the customer is provided to an authenticating network. The authenticating network uses the phone number to inspect a database relating phone numbers to account indicators and associated customer identity indicators so as to obtain an account indicator and a customer identity indicator of the mobile user terminal of the customer. A call connection between the authenticating network and the mobile user terminal is set up. A customer identity indicator is sent from the mobile user terminal to the authenticating network. The authenticating network checks that the customer identity indicator received from the mobile user terminal accords with that expected from the inspection of the database. If so the authenticating network indicates that the customer is authentic so as to enable the payment to proceed.

## Description

### Field of the Invention

The present invention relates to a method of paying from an account by a customer having a mobile user terminal. The present invention also relates to customer authenticating network operative in paying from an account by a customer having a mobile user terminal.

### Description of the Related Art

A common way for customers to make payments is using credit or debit accounts, for which they usually have an associated credit or debit card. For example, such credit or debit accounts provide an easy way to pay for shopping done over the Internet or by phone.

### Summary of the Invention

A method of paying from an account, and a customer authenticating network, according to the present invention are defined in the independent claims to which the reader should now refer. Preferred features are laid out in the dependent claims:

An example of the present invention is a method of paying from an account by a customer having a mobile user terminal, which comprises the following steps. The phone number of the mobile user terminal of the customer is provided to an authenticating network. The authenticating network uses the phone number to inspect a database relating phone numbers to account indicators and associated customer identity indicators so as to obtain an account indicator and a customer identity indicator associated with the mobile user terminal of the customer. A call connection between the authenticating network and the mobile user terminal is set up. A customer identity indicator is sent from the mobile user terminal to the authenticating network. The authenticating network checks that the customer identity indicator received from the mobile user terminal accords with that expected from the inspection of the database. If so, the authenticating network indicates that the customer is authentic so as to enable the payment to proceed.

The present invention also provides a corresponding customer authenticating network operative in paying from an account by a customer having a mobile user terminal.

It will be noted that in preferred embodiments a call from the authenticating network to the customer's mobile user terminal, e.g. mobile phone, must be correctly responded to by providing the expected customer PIN, in order for payment to be authorised. Preferred embodiments thus have advantages in combating fraud, for example, credit card fraud over the internet and in retail transactions.

Furthermore, the customer need not himself provide account details, such as card number and expiry date, thereby further reducing the risk of fraud. For example, in transactions over the internet, risks are avoided associated with a customer passing account details or a PIN over the internet.

Preferred embodiments provide customer authentication that is quick, convenient, paperless and safe. The customer has no need to carry a credit/debit card itself in order to pay from his/her credit/debit account making the card less likely to be lost or stolen. Local authentication of signatures at shop tills is no longer required, and the till operator is not required to store signed receipts safely.

### Brief Description of the Drawings

Preferred embodiments of the present invention will now be described by way of example and with reference to the drawings, in which:
Figure 1 is a diagram illustrating a retail store transaction (prior art)
Figure 2 is a diagram illustrating an online transaction (prior art), and
Figure 3 is a diagram illustrating a preferred retail store transaction, and
Figure 4 is a diagram illustrating a preferred online transaction.

### Detailed Description

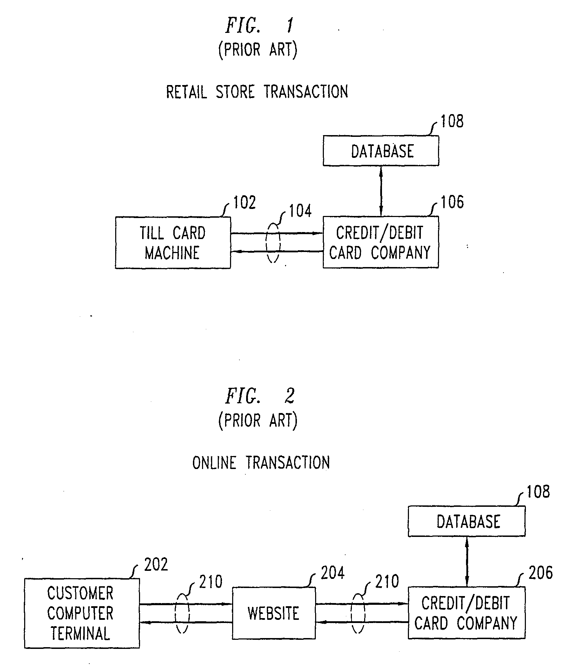

As shown in Figure 1, in known operations at a check-out or till, a credit or debit card is swiped at the till card machine 102 so that the card details are passed, through an established connection 104 , to the credit card company 106. The credit/debit card itself is of a size convenient to fit into a wallet, and is typically punched with the card number (i.e. account number), which can range from of 13 to 16 digits. The card number is also recorded on a magnetic strip. The expiry date of the card is also punched into the card.

The details are validated by the credit card company 106 comparing the received information with data of card details stored by a database 108. Approval of the transaction is sent back to the till card machine 102 over the established connection 104. The customer is then requested to sign the receipt. The signature on the receipt is compared by the till operator with the signature written on the back of the card. As an alternative, it is known for the customer to type in a Personal Identification Number (PIN) at a keypad which is part of the till, the PIN being passed via the established connection to the credit card company for authentication purposes.

These known ways of buying goods or services are highly susceptible to fraud. For example, a counterfeit card can be made using information from a receipt left behind in a store by an honest but careless user. Many receipts show the card number and the expiry date. Also, a lost card can be used by any fraudster into whose hand the card falls. Another disadvantage is that cards, although small, still need to be carried around. Some cards are difficult to swipe at certain tills due to degradation of the card or the till machine. Also time is required to provide and check a signature, and signed receipts must be stored carefully.

As shown in Figure 2, in known transactions over the internet or over the phone, the card number and then the expiry date of the card are provided in order to purchase goods or services. These card details are passed from the customer's computer terminal 202 over the internet 210 first to the vendor's website 204 then on to the credit card company 206 where the purchase is validated. Such card details are even easier to steal than cards themselves. A clever thief can create "valid" card numbers by accessing card-number generators over the Internet. Alternatively the passage over the internet of card numbers and expiry dates can be monitored by fraudsters.

Turning now to preferred embodiments of the present invention, systems are described that authenticate a transaction using a PIN sent by the customer from her/his mobile phone in reply to a call to the mobile phone requesting that information. A mobile phone is but one type of mobile user terminal, others could be used instead. The mobile phone or other type of terminal operates in accordance with Universal Mobile Telecommunications System (UMTS), Global System for Mobiles (GSM), or some other code division multiple access (CDMA) or wideband-code division multiple access (CDMA) standard.

The card number and its details are stored in a database of a mobile phone company. It is the mobile phone company which dials out to a credit card company in order to authenticate and approves the transaction. This use of the mobile phone increases security, particularly for online card transactions but also for customer transactions in retail stores.

The sophisticated authentication and encryption techniques used generally in mobile telecommunications add to the security that is provided.

### Retail Store Transaction

In a retail store transaction, the customer, whom is also a mobile phone user, offers to buy items which are scanned at the till. The till operator then enters the customer's mobile phone number into the till. In response, the customer receives a call to his/her mobile phone prompting him to enter his Personal Identification Number (PIN). Within a few seconds, the till is notified that the transaction is authorised.

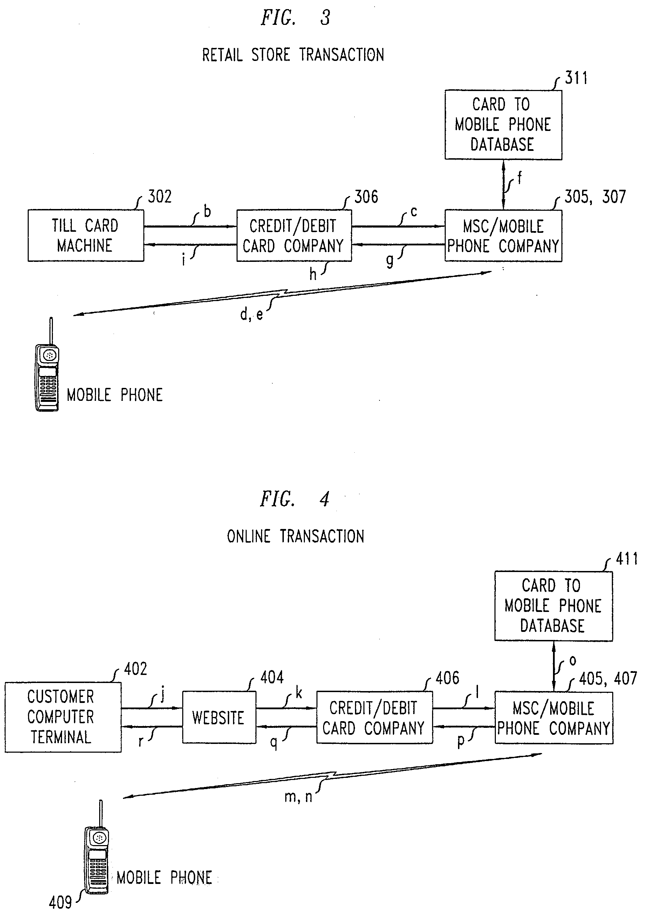

An example transaction in a supermarket or retail store is shown in Figure 3. The following steps are involved:
(a) The till operator scans the items to buy and enters the customer's mobile phone number into the till in particular into a keypad of a till card machine 302 (which is part of the till).
(b) The till card machine 302 accesses the credit/debit card company's computer 306 and sends details of the customer mobile number and details of the transaction (i.e. the amount of funds to be transferred).
(c) The credit /debit card company's computer establishes a connection to a Mobile Switching Centre (MSC) 305 of a mobile phone network 307 by dialling up a specific telephone number. The credit/debit card company then provides the customer's mobile phone number to the mobile phone network 307 and requests that a Personal Identification Number (PIN) number be obtained in order to authenticate the customer.
(d) The MSC 305 of the mobile phone network 307 makes a call to the customer's mobile phone 309 and a recorded voice asks for the PIN number.
(e) The customer enters the PIN via the keypad of her/his mobile phone.
(f) The MSC 305 inspects an associated database 311, which contains the mapping of the customer's mobile phone number to the credit/ debit cards owned, that data having been previously provided by the customer to his mobile phone network.
(g) The MSC 305 sends the PIN number, and the card details (card number, expiry date) to the credit card network 306.
(h) The credit card company's computer 306 decides whether the PIN number entered is the correct one for those card details. If so the customer is considered authentic such that (subject to the amount of funds to be transferred being less than a predetermined maximum) the transaction is validated and the funds are transferred.
(i) A notification that the transaction is accepted is sent from the computer 306 to the till card machine 302 so as to inform the till operator and so the customer.

It will be seen that the customer is not asked to provide a signature on paper. In other embodiments, a signature is requested and compared to one, say, written on the back of credit/debit card as an additional authentication step.

### Online Transaction Method

A typical preferred Internet transaction is shown in Figure 4. The transaction is authenticated using a mobile phone in a few seconds. The transaction involves the following steps:
(j) Using his/her computer terminal 402, the customer selects the item to buy from the website 404 and gives his/her mobile phone number to the website 404, in particular by filling out a web form which has boxes in which to insert the information.
(k) The website 404 accesses the credit/debit card company's compute 406 and sends details of the customer mobile number and details of the transaction (amount of funds to be transferred).
(*l*) The credit /debit card company's computer 406 establishes a connection to the mobile phone network 407 by dialling a specific number and provides the customer's mobile phone number and requests for a valid Personal Identification Number (PIN) number to authenticate the customer.
(m) The mobile phone network 407 includes a mobile switching centre (MSC 405) which makes a call to the customer's mobile phone 409 and a recorded voice asks for the PIN number.
(n) The customer enters the PIN via the keypad of his mobile phone 409.
(o) The MSC 405 queries an associated database 411 which contains the mapping of the customer's mobile phone number to the credit/ debit cards owned (these were provided beforehand by the customer to his mobile phone company 407).
(p) The MSC 405 sends the PIN number, the card details (card number, expiry date) to the card company.
(q) The credit card company's computer 406 decides whether the PIN number entered is the correct one for those card details. If so, the customer is considered authentic such that (subject to the amount of funds to be transferred being less than a predetermined maximum) an indication that the transaction is valid is sent to the website 404 and the funds are transferred.
(r) The website 404 sends a notification that the transaction is accepted to the customer's computer terminal 402.

### General

It will be seen that the preferred methods are essentially automated, save for the customer answering his/her mobile phone and sending the appropriate PIN.

It will be noted that the same mobile phone can be used in transactions involving different credit card companies e.g. MasterCard or Visa differentiated by which of several PIN numbers is sent from the mobile user terminal.

## Claims

1. The method comprising the steps of :
the phone number of the mobile user terminal of the customer being provided to an authenticating network,
the authenticating network using the phone number to inspect a database relating phone numbers to account indicators and associated customer identity indicators so as to obtain an account indicator and a customer identity indicator associated with the mobile user terminal of the customer,
a call connection between the authenticating network and the mobile user terminal being set up,
a customer identity indicator being sent from the mobile user terminal to the authenticating network,
the authenticating network checking that the customer identity indicator received from the mobile user terminal accords with that expected from the inspection of the database, and if so indicating that the customer is authentic so as to enable the payment to proceed.

2. A method according to claim 1, in which the authenticating network comprises an account-controlling processor and a telecommunications network, the telecommunications network including said database and sending the account indicator and expected customer identity indicator to the account-controlling processor,
the account-controlling processor checking that the customer identity indicator received from the mobile user terminal accords with that expected from the inspection of the database, and if so indicating that the customer is authentic so as to enable the payment to proceed.

3. A method according to claim 1 or claim 2, in which the account indicator comprises the number of a credit card or debit card.

4. A method according to any preceding claim, in which the customer identity indicator is sent from the mobile user terminal in response to a prerecorded voice message being sent to the mobile user terminal after call connection step-up, the prerecorded voice message requesting provision of the customer identity indicator.

5. A method according to any preceding claim, in which the customer identity indicator is a personal identity number (PIN).

6. A method according to claim 5, in which the mobile user terminal has a keypad, the PIN being provided by the customer using the keypad.

7. A method according to any of claims 1 to 6, in which the phone number is provided to the authenticating network over the internet from a computer terminal of a customer.

8. A method according to any of claims 1 to 6, in which the phone number is input to a till at a check-out or sales desk for transmission to the authenticating network.

9. A customer authenticating network operative in paying from an account by a customer having a mobile user terminal,
the authenticating network comprising receiving means, a database, database inspection means, call connection means, further receiving means, and checking means,
the receiving means being operative to receive the phone number of the mobile user terminal of the customer,
the database inspection means being operative to use the phone number to inspect the database that relates phone numbers to account indicators and associated customer identity indicators so as to obtain an account indicator and a customer identity indicator associated with the mobile user terminal of the customer,
the call connection means being operative to set up a call connection to the mobile user terminal,
the further receiving means being operative to receive a customer identity indicator sent from the mobile user terminal,
the checking means being operative to check that the customer identity indicator received from the mobile user terminal accords with that expected from the inspection of the database, and if so the checking means indicating that the customer is authentic so as to enable the payment to proceed.
